# EUROPÄISCHE PATENTANMELDUNG

(11) **EP 4 009 459 A1**
(43) Veröffentlichungstag der Anmeldung: **08.06.2022**
(21) Anmeldenummer: 21020580.3
(22) Anmeldetag: 22.11.2021
(51) Int. Cl.: H02G 3/08, H02G 3/12

(54) **HOHLWANDINSTALLATIONSDOSE**

(30) Priorität: 04.12.2020 DE 202020005043 U
(71) Anmelder: Bronsert, Denis, 08523 Plauen (DE)
(72) Erfinder: Bronsert, Denis, 08523 Plauen (DE)
(74) Vertreter: Helge, Reiner

(57) **Zusammenfassung**

Hohlwandinstallationsdose für gebäudetechnische Installation, umfassend elektrischer und / oder elektronischer Installationskomponenten, mit einem durch einen Boden, einer umlaufenden Wand und einer dem Boden gegenüberliegenden Montageöffnung gebildeten Dosenkörper aus Kunststoff, wobei die Hohlwandinstallationsdose zweigeteilt ausgeführt ist und eine Aufnahmedose (1) mit einem Abdeckelement (4) und eine in das Abdeckelement (4) einsetzbare Einbaudose (2) umfasst.

## Beschreibung

Die Erfindung betrifft eine Hohlwandinstallationsdose für gebäudetechnische Installationen, insbesondere elektrischer und / oder elektronischer Installationskomponenten mit einem durch einen Boden, einer umlaufenden Wand und einer dem Boden gegenüberliegenden Montageöffnung gebildeten Dosenkörper aus Kunststoff.

Hohlwanddosen der in Rede stehenden Art sind Installationsdosen, die für elektrische Anwendungen bei der Installation von elektrischen und / oder elektronischen Geräten in Gebäuden eingesetzt werden. Derartige Hohlwanddosen verfügen über einen Dosenkörper, der durch einen Boden, eine umlaufende Wand und eine dem Boden gegenüberliegende Montageöffnung gebildet ist. Der Dosenkörper selbst dient zur Aufnahme von elektrischen / elektronischen Installationsgeräten, etwa Steckdosen, Geräteträger und dergleichen. An den Dosenkörper ist an seinem die Montageöffnung einfassenden Wandabschnitt ein in radialer Richtung nach außen vorspringender Stützflansch angeformt. Dieser dient zur Begrenzung der Einsetztiefe der Hohlwanddose, wenn diese in ein in eine Gebäudewand angebrachtes Dosenloch eingesetzt wird.

Die Hohlwanddose verfügt des Weiteren über Befestigungsmittel zum Befestigen dieser in einem solchen Dosenloch. Bei den Befestigungsmitteln kann es sich beispielsweise um in radialer Richtung ausstellbare Klemmkörper handeln, von denen jeder auf dem Gewindeschaft einer Stellschraube sitzt. Die Stellschraube ist in einem in den Dosenkörper integrierten, durch einen Schraubenkanalmantel eingefaßten Schraubenkanal geführt. Zum Einschieben der Hohlwanddose in ein Dosenloch befindet sich jeder Klemmkörper in einer in die Außenwand des Dosenkörpers eingebrachten Klemmkörperaufnahme. Ist die Hohlwanddose mit ihrem Dosenkörper in ein Dosenloch eingesetzt, werden die Klemmkörper zum Hintergreifen der das Dosenloch einfassenden Wandabschnitte ausgeschwenkt. Durch Spannen der Stellschrauben wird die Hohlwanddose an diesem Wandabschnitt verklemmt, die sich sodann zwischen dem Stützflansch und den ausgeschwenkten Klemmkörpern befindet.

Derartige Installationsdosen sind bekannt und werden insbesondere in der sogenannten Hohlwandinstallation verwendet. Dabei geht es darum, dass Wände in Ständerbauweise errichtet werden, wobei die Wandflächen gebildet werden, indem diese in Ständerbauweise errichteten Tragstrukturen beplankt werden. Diese Beplankung erfolgt üblicherweise mit Gipskartonplatten.

Beispielsweise ist eine solche Installationsdose für die Hohlwandinstallation zur Aufnahme von elektrotechnischen oder elektronischen Bauelementen aus dem DE 20 2014 100 373 U1bekannt. Die Installationsdose besteht aus einem Dosenkörper, wobei der Dosenkörper aus mindestens einer Bodenfläche, einer Mantelfläche und einer Aufnahmeöffnung gebildet ist. An der Außenseite der Mantelfläche sind mindestens zwei Führungsnuten für Spannpratzen angeordnet, die mittels Spannschrauben in den Führungsnuten bewegbar sind, und der Befestigung der Installationsdose dienen.

Die DE 10 2005 004 005 B4 betrifft Hohlwanddose für elektrotechnische Zwecke, die zur Montage in einer Hohlwand von vorn in einen Durchbruch der Wand einsetzbar ist, wobei die Einstecklage der Dose in der Montagesolllage durch an der Wand angreifende Anschläge und/oder Befestigungselemente gesichert ist, wobei jedes Befestigungselement aus einer Lasche und einer die Lasche gewindemäßig durchgreifenden Schraube besteht und die Lasche mittels der Schraube verstellbar sowie mindestens mittelbar ein- und ausschwenkbar ist.

Derartige gattungsgemäße elektrische Hohlwanddosen werden in einen vorzugsweise kreisrunden Durchbruch der Wand eingesetzt. In der Einstecklage liegt die Dose mit ihrer Mündung in der Wandflächenebene, wobei die Dose am Mündungsrand Anschläge aufweist, beispielsweise in Form eines umlaufenden Kragens. Eingesetzt werden in derartige Hohlwanddosen aufgrund ihrer geringen Abmessungen meist nur elektrische Bauelemente, wie Schalter oder Steckdosen.

Der Nachteil der vorbekannten Lösungen besteht darin, dass innerhalb des Innenraumes nur wenig Platz für weitere elektrische und/oder elektronische Komponenten ist.

Aus dem DE 20 2013 103 005 U1 ist eine Installationsdose für die Hohlwandinstallation zur Aufnahme von elektrotechnischen oder elektronischen Bauelementen, bestehend aus einem Dosenkörper und einem daran seitlich angeschlossenen Aufnahmeraum, wobei der Dosenkörper mindestens aus einer Bodenfläche, einer Mantelfläche und einer Aufnahmeöffnung gebildet ist und wobei der seitlich angeschlossene Aufnahmeraum mit Abstand zur Aufnahmeöffnung an der Mantelfläche des Dosenkörpers angeordnet ist.

Die DE 43 12 661 C2 betrifft einen Hohlkörper für die Betonbauinstallation, bestehend aus einem Unterbringungsraum für elektrische Einrichtungen, wie Leuchten, Dosen, Klemmen od. dgl., mit Haltemitteln zu seinem Festlegen an einer Schalung od. dgl., wobei der Hohlkörper aus einem einseitig geschlossenen hohlzylindrischen Rückteil besteht, dessen vordere Öffnung durch einen Frontteil verschließbar ist, und wobei ein und derselbe Rückteil mit einem von mehreren vorhandenen, unterschiedlich gestalteten und/oder bestückten Frontteilen verbindbar ist, und jeder dieser Frontteile an einer Betonbauschalung befestigbar ist, und in die Öffnung des Frontteiles eine Lampe, wie Halogenlampe, mit einem Reflektor eingesetzt ist, und dass der Rückteil des Hohlkörpers wenigstens einen Stutzen zum lösbaren Anbringen eines Anschlußgehäuses aufweist.

Dem Rückteil des Hohlkörpers ist wenigstens einen Stutzen zuordnet, mit dem lösbar ein Anschlußgehäuse verbunden werden kann. In diesem, mit dem Stutzen des Hohlkörpers zu kuppelnden Anschlußgehäuse können unterschiedliche elektrische Einrichtungen, vorzugsweise aber ein Transformator, untergebracht werden. Es sind in an sich bekannter Weise mehrere, unterschiedlich gestaltete Frontteile vorhanden, von denen der Benutzer in Abhängigkeit von den vorhandenen Verhältnissen einen auswählen und diesen mit dem Rückteil verbinden kann. Der jeweils benutzte Frontteil wird an einer Betonbauschalung befestigt.

Der Erfindung liegt daher die Aufgabe zugrunde, eine Hohlwandinstallationsdose zu schaffen, die einfach in der Handhabung ist und außer einem Aufnahmeraum für ein elektrotechnisches oder elektronisches Bauelement noch einen weiteren Installationsraum aufweist.

Zur Lösung dieser Aufgabe wird gemäß Anspruch 1 eine Hohlwandinstallationsdose vorgeschlagen zur Aufnahme von elektrotechnischen oder elektronischen Bauelementen/Installationskomponenten. Weitere Ausgestaltungen sind den Unteransprüchen und dem nachfolgenden Ausführungsbeispiels zu entnehmen.

Die erfindungsgemäße aus einem Kunststoff bestehende Hohlwandinstallationsdose findet Anwendung in der gebäudetechnischen Installation, umfassend den Einbau elektrischer und / oder elektronischer Installationskomponenten, wie Schalter, Steckdosen, Transformatoren, elektrische oder elektronische Steuergeräte usw.

Die Hohlwandinstallationsdose ist zweigeteilt ausgeführt, wobei diese eine Aufnahmedose mit einem Abdeckelement und eine in das Abdeckelement einsetzbare Einbaudose umfasst. Die Aufnahmedose umfasst einen Aufnahmeraum zur Aufnahme der Einbaudose für Steckdosen und / oder Schalter sowie weiteren elektrischer und / oder elektronischer Installationskomponenten und einem separaten Kabelraum zur Führung von elektrischen Kabeln und Verteilerelementen.

Die Hohlwandinstallationsdose kann mittels Befestigungselemente an den durch Platten verkleideten Ständerwerk einer Wand befestigt werden. Die Einbautiefe der Aufnahmedose ist entsprechend der Wanddicke regulierbar.

Anhand eines Ausführungsbeispiels soll die Erfindung näher beschrieben werden. Es zeigen:
- Figur 1 -: Explosivdarstellung der erfindungsgemäßen Hohlwandinstallationsdose
- Figur 2 -: Einbaulage der erfindungsgemäßen Hohlwandinstallationsdose

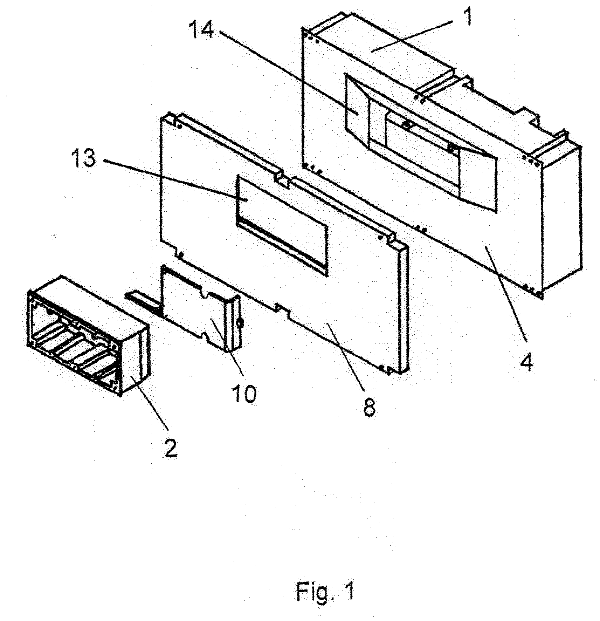

Die Figur 1 zeigt eine Explosivdarstellung der erfindungsgemäßen Hohlwandinstallationsdose aus einem Kunststoffmaterial. Die Hohlwandinstallationsdose besteht im Wesentlichen aus einer Aufnahmedose **1** mit dem Abdeckelement **4** und einer in eine Öffnung **14** des Abdeckelementes **4** einsetzbaren Einbaudose **2.** Das Abdeckelement **4** wird mit der Aufnahmedose **1** verschraubt.

Nach der Installation der Kabel in den in der Aufnahmedose **1** vorgesehenen Kabelraum **12,** kann dieser durch eine Abdeckplatte **10** abgedeckt werden. Die Abdeckplatte **10** weist Bereiche durch Durchführungen elektrischer Kabel in den Aufnahmeraum **3** und letztendlich in die Einbaudose **2** auf.

Nach der Montage der Hohlwandinstallationsdose, beispielsweise in eine mit Gipskartonplatten verkleidete Ständerwand **9,** wird die gesamte Hohlwandinstallationsdose mit einem Gipskartonplattenabschnitt **8**, der einen Ausschnitt **13** für den Einsatz einer Einbaudose **2** aufweist, abgedeckt. Die Verwendung der erfindungsgemäßen Hohlwandinstallationsdose ist nicht nur auf mit Platten verkleideten Ständerwänden beschränkt, sondern diese kann auch in herkömmlichen Mauerwerken verbaut werden.

Die Befestigung der erfindungsgemäßen Hohlwandinstallationsdose erfolgt über die Befestigungselemente **5**, die mittels der Schrauben **6** an den Platten der Wand **9** befestigt sind. Die Befestigungselemente **5** sind so ausgeführt, dass mittels der Stellschrauben **7** im eingebauten Zustand der Aufnahmedose diese mittels der Stellschrauben **7** in der Höhe derart reguliert werden kann, dass der Gipskartonplattenabschnitt **8** mit dem Ausschnitt für den Einsatz der Einbaudose **2** bündig mit der umgebenden Oberfläche der Wand **9** aufgebracht werden kann.

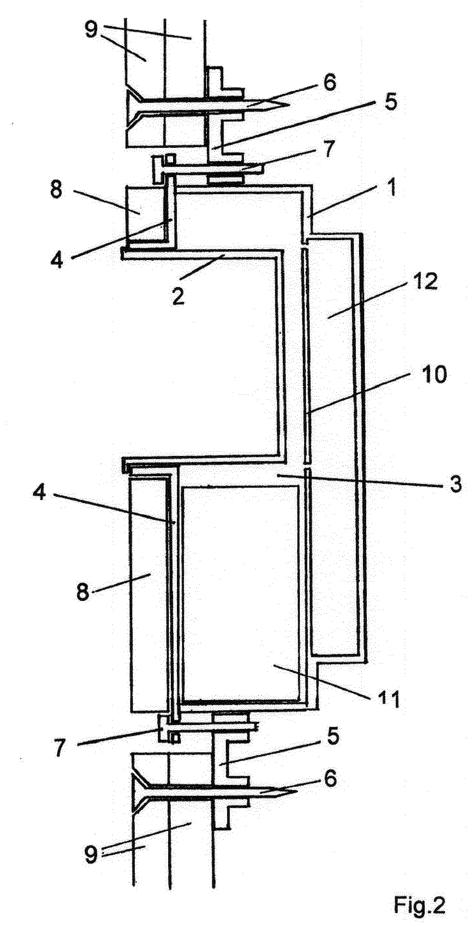

Die Figur 2 zeigt eine Einbaulage der erfindungsgemäßen Hohlwandinstallationsdose in einer mit Gipskartonplatten doppelt beplankten Ständerwand **9**.

Nach dem Ausschneiden und Anpassen der Öffnung in den Gipskartonplatten werden rückseitig die Befestigungselemente **5** an den Gipskartonplatten mittels der Schrauben **6** angebracht. Anschließend werden die Kabel in den Kabelraum **12** eingeführt und die Aufnahmedose **1** in den Ausschnitt der Gipskartonplatten eingesetzt.

Verschlossen wird die Aufnahmedose **1**, nachdem der Kabelraum **12** durch die Abdeckplatte **10** verschlossen wurde, mittels des Abdeckelements **4** durch Verschrauben. Das Abdeckelement **4** weist eine Öffnung **14** für den Einsatz der Einbaudose **2** auf.

Das Abdeckelement **4** und damit die Aufnahmedose **1** kann mittels der Stellschraube **7** in ihrer Einbautiefe derart reguliert werden, dass der Gipskartonabschnitt **8** nach der Befestigung an der Aufnahmedose **1** bündig mit der die Hohlwandinstallationsdose umgebenden Gipskartonplatten der Wand **9** abschließt. Anschließend wird der Spalt zwischen dem Gipskartonabschnitt **8** und den umgebenden Gipskartonplatten der Wand **9** verspachtelt.

Dadurch ist in der Wandfläche nur noch die Öffnung **14** für die Einbaudose **1** zu sehen. Über diese Öffnung kann nunmehr eine Steuer- und Stromversorgungseinheit als Installationskomponente **11** in den Aufnahmeraum **3** der Aufnahmedose **1** eingesetzt und verkabelt werden.

Über diese Installationskomponente **11** kann beispielsweise eine in den Fußbodenbelag oder in den Randleisten angeordnete Beleuchtungseinheit mit Strom versorgt und angesteuert werden.

Die elektrischen Kabel aus dem Kabelraum **12** kommend werden in die Einbaudose **2** eingeführt. In die Einbaudose **2** können dann Schalter und / oder Steckdosen eingesetzt und verkabelt werden. Anschließend wird die Einbaudose **2** mit der durch das Abdeckelement **4** verschlossenen Aufnahmedose **1** verschraubt. Schalter und / oder Steckdosen werden abschließend mit den dazugehörigen Abdeckungen versehen.

### Bezugszeichenaufstellung

- 1 -: Aufnahmedose
- 2 -: Einbaudose
- 3 -: Aufnahmeraum
- 4 -: Abdeckelement
- 5 -: Befestigungselement
- 6 -: Schraube
- 7 -: Stellschraube
- 8 -: Gipskartonplattenabschnitt
- 9 -: Wand
- 10 -: Abdeckplatte
- 11 -: Installationskomponente
- 12 -: Kabelraum
- 13 -: Ausschnitt
- 14 -: Öffnung

## Patentansprüche

1. Hohlwandinstallationsdose für gebäudetechnische Installation, umfassend elektrischer und / oder elektronischer Installationskomponenten, mit einem durch einen Boden, einer umlaufenden Wand und einer dem Boden gegenüberliegenden Montageöffnung gebildeten Dosenkörper aus Kunststoff,
**dadurch gekennzeichnet, dass**
die Hohlwandinstallationsdose zweigeteilt ausgeführt ist, wobei diese eine Aufnahmedose (1) mit einem Abdeckelement (4) und eine in das Abdeckelement (4) einsetzbare Einbaudose (2) umfasst.

2. Hohlwandinstallationsdose nach Anspruch 1,
**dadurch gekennzeichnet, dass**
die Aufnahmedose (1) einen Aufnahmeraum (3) für die Einbaudose (2) und weitere elektrische und / oder elektronische Installationskomponenten (11) und einen Kabelraum (12) zur Führung von elektrischen Kabeln und Verteilerelementen umfasst.

3. Hohlwandinstallationsdose nach Anspruch 1 und 2,
**dadurch gekennzeichnet, dass**
die Hohlwandinstallationsdose mittels Befestigungselemente (5) an die mittels Gipskartonplatten verkleidete Wand (9) befestigbar ist, wobei die Einbautiefe der Aufnahmedose (1) mittels der Stellschrauben (7) entsprechend der Wanddicke einstellbar ist.

4. Hohlwandinstallationsdose nach Anspruch 1 bis 3,
**dadurch gekennzeichnet, dass**
das Abdeckelement (4) der Aufnahmedose (1) eine Aufnahme (14) zum Einsetzen der Einbaudose (2) aufweist.
